# FASCICULE DE BREVET EUROPEEN

(11) **EP 0 572 650 B1**
(45) Date de publication et mention de la délivrance du brevet: **09.08.1995**
(21) Numéro de dépôt: 93902368.5
(22) Date de dépôt: 22.12.1992
(51) Int. Cl.: B65G 1/04

(54) **MAGASIN DE STOCKAGE AUTOMATISE ET NOUVEAU TYPE DE CHARIOT PERMETTANT LA MISE EN PLACE OU L'EXTRACTION DES PRODUITS A L'INTERIEUR DES ZONES DE STOCKAGE**
AUTOMATISIERTES LAGER UND WAGEN ZUR EINLAGERUNG UND ENTNAHME VON PRODUKTEN IN DEN SPEICHERBEREICHEN
AUTOMATED STORAGE ROOM AND NOVEL TYPE OF CARRIAGE FOR POSITIONING OR SELECTING PRODUCTS INSIDE STORAGE AREAS

(30) Priorité: 24.12.1991 FR 9116337
(43) Date de publication de la demande: 08.12.1993
(73) Titulaire: SOCIETE D'ETUDE EN MECANISATION ET AUTOMATISATION - CIMAT, F-07200 Aubenas (FR)
(72) Inventeur: GLEYZE, Jean, F-07200 Aubenas (FR); ZOLLER, Frédéric, F-07200 Aubenas (FR)
(74) Mandataire: Laurent, Michel
(86) Numéro de dépôt international: FR9201226
(87) Numéro de publication internationale: WO9312998

(56) Documents cités:
- DE-C- 957 200
- FR-A- 2 651 823

## Description

La présente invention concerne un perfectionnement apporté aux installations automatisées qui permettent d'assurer le stockage et/ou la mise à disposition de produits divers, installations qui, dans la suite de la description, seront désignées par l'expression "magasin de stockage". Elle a trait également à un nouveau type de chariot permettant d'assurer les déplacements des produits à l'intérieur d'un tel magasin de stockage comportant une pluralité de niveaux superposés, chariot qui éventuellement, pourrait également être utilisé pour assurer les déplacements de produits sur un seul niveau, sol par exemple.

Dans de nombreux secteurs industriels, se pose le problème d'avoir à stocker temporairement des produits, et ce aussi bien pour les besoins propres de l'entreprise en vue de son activité (matières premières, pièces détachées..), que les articles fabriqués par l'entreprise et que l'on doit stocker temporairement avant de les mettre à disposition de l'utilisateur ou acheteur.

De très nombreuses propositions ont été faites à ce jour pour réaliser des magasins de stockage automatiques permettant non seulement de limiter au minimum les interventions manuelles, mais également de stocker, dans un volume donné, le plus grand nombre de produits possible.

A ce jour, la solution la plus répandue pour réaliser des magasins de stockage automatiques, consiste à réaliser des ensembles dans lesquels les zones de rangement se présentent sensiblement sous la forme de "colonnes" de grande hauteur, subdivisées dans le sens vertical en une pluralité de niveaux superposés constituant des rangées de casiers, alvéoles, dont les dimension sont fonction des produits à stocker, ces "colonnes" étant séparées entre elles par des allées le long desquelles se déplacent des ensembles désignés couramment par l'expression "transtockeur" ou "translateurs".

D'une manière générale, de tels magasins de stockage définissent donc trois axes selon lesquels sont déplacés les produits, à savoir :
- X : axe longitudinal du magasin, des meubles ou colonnes, des allées ;
- Y : axe transversal perpendiculaire aux meubles (colonnes), et aux allées ;
- Z : axe vertical.

A ce jour, comme dit précédemment, pour assurer la manutention des produits à l'intérieur de tels ensembles de stockage, les constructeurs de matériels proposent des machines automatiques ou pilotées du type "transtockeur" ou "translateurs", qui permettent de prélever et de ranger des palettes ou des containers dans les alvéoles des colonnes qui constituent les faces latérales de chaque allée. De telles machines automatiques de manutention ont toutes en commun le fait qu'elles roulent soit directement au sol, soit sur des rails fixés au sol. Elles peuvent ou non changer d'allée. Elles comportent toutes un système élévateur qui permet d'amener l'organe de manutention de la palette ou du container en face de l'alvéole concernée.

Compte tenu du fait que la hauteur des magasins devient de plus en plus importante, ces machines deviennent très hautes (hauteur pouvant atteindre plusieurs dizaines de mètres), avec notamment une incidence importante sur leur coût et sur la nécessité d'avoir une géométrie du palettier d'une part, du sol d'autre part, de plus en plus contraignante.

Pour assurer la manutention de produits au sol, il a été proposé de réaliser des chariots autonomes pouvant effectuer des changements de direction, ces chariots étant soit guidés par des rails ou auto-guidés et étant en général équipés d'une ou plusieurs roues orientables leur permettant d'effectuer des virage. Une telle conception de chariots entraîne donc la réalisation de circuits de déplacement qui, dans les zones de changements de direction, impliquent une surface importante, étant donné que le chariot se déplace selon une courbe ce qui, en conséquence, diminue, pour une surface donnée, la zone disponible au stockage proprement dit.

Par ailleurs, de tels chariots ne peuvent se déplacer que sur un seul niveau et ils ne peuvent pas travailler indifféremment à plusieurs niveaux différents.

Or on a trouvé, et c'est ce qui fait l'objet de la présente invention, une solution simple, économique, facile à mettre en oeuvre, qui permet de résoudre les inconvénients des solutions antérieures par le fait qu'elle autorise la réalisation d'ensembles de stockage n'occupant qu'un minimum de surface au sol, permettant ainsi de ne pas pénaliser le volume utile de l'ensemble du magasin.

D'une manière générale, le nouveau magasin de stockage automatisé conforme à l'invention se présente sous la forme d'un ensemble comprenant une pluralité de niveaux superposés, la mise en place et le prélèvement à l'intérieur des zones de stockage étant réalisé par l'intermédiaire de chariots autonomes ;
- chaque niveau de rangement comprenant un ensemble de rails formant des voies orientées selon un axe longitudinal X du magasin à l'intérieur de chaque travée et selon un axe transversal Y ;
- les chariots autonomes comportent deux châssis permutables équipés chacun de jeux de roues pouvant être associés, l'un avec les rails orientés selon l'axe X, l'autre avec les rails orientés selon l'axe Y, d'une manière comparable aux enseignements du FR-A-2 651 823.

Le magasin selon l'invention se **caractérise** en ce que :
- chaque niveau est subdivisé en couloirs parallèles de part et d'autre desquels sont disposées des rangées de casiers ou alvéoles dont les dimensions sont fonction des produits à stocker ;
- lesdites voies orientées selon l'axe X du magasin et selon l'axe Y sont constituées :
   . d'une pluralité de voies orientées selon l'axe longitudinal X du magasin à l'intérieur de chaque travée ;
   . soit d'une seule voie orientée selon l'axe transversal Y perpendiculairement et en bout des travées, soit de deux voies orientées selon l'axe transversal Y perpendiculairement et aux deux bouts des travées ;
- les chariots autonomes comportent des moyens (fourches bidirectionnelles) sur lesquels repose le produit à manipuler pour assurer sa mise en place et son extraction d'une case de rangement, et ;
- lesdits chariots sont amenés à un niveau prédéterminé par l'intermédiaire d'au moins un ensemble élévateur.

Avantageusement et en pratique, selon une forme préférentielle de réalisation conforme à l'invention, permettant éventuellement d'utiliser lesdits chariots pour assurer le transport de matières diverses sur un seul niveau, le chariot autonome permettant la mise en place et l'extraction de produits à l'intérieur des zones de stockage comporte deux châssis élémentaires, mobiles l'un par rapport à l'autre selon l'axe vertical :
- l'un des châssis comportant des roues motrices et porteuses permettant d'assurer les déplacements du chariot selon un axe X ;
- le second châssis comportant des roues motrices et porteuses permettant d'assurer les déplacements du chariot selon un axe Y, et il se caractérise en ce que le second châssis supporte des fourches bidirectionnelles sur lesquelles repose le produit à manipuler pour mise en place ou extraction d'une case de rangement, et en ce que le premier châssis comporte des galets de guidage latéral selon les deux axes XY.

Par ailleurs, si l'ensemble de stockage conforme à l'invention comporte des rails de guidage selon l'axe X à chaque niveau de rangement, les rails de guidage permettant d'effectuer les déplacements selon l'axe Y peuvent être disposés soit à une seule des extrémités des couloirs, soit aux deux extrémités.

Chaque chariot comporte par ailleurs des moyens permettant d'assurer ces déplacements de manière automatique, et plus particulièrement un automate programmable ou son équivalent informatique susceptible d'emmagasiner l'information nécessaire à exécuter une séquence d'opérations.

Dans le ou les ascenseurs permettant d'assurer les déplacements selon l'axe vertical Z, un ensemble permet à l'automate du chariot d'être en communication avec l'ordinateur permettant de gérer les mouvements. Cette mise en relation peut également être permanente par radio ; cette dernière solution présente cependant comme inconvénient d'être moins fiable. Le ou les ascenseurs(s) permettant d'assurer les déplacements des chariots selon l'axe vertical Z peuvent être disposés soit à l'extérieur des couloirs et en regard de ces dernières soit, de préférence, intégrés à l'intérieur même du magasin.

Grâce à un tel ensemble, il est donc possible de réaliser des magasins de stockage comportant un minimum de place perdue pour la circulation des marchandises.

L'invention et les avantages qu'elle apporte seront cependant mieux compris grâce à l'exemple de réalisation donné ci-après à titre indicatif mais non limitatif et qui est illustré par les schémas annexés dans lesquels :
- les figures 1 et 2 sont des vues respectivement en élévation et de dessus d'un magasin de stockage automatique réalisé conformément à l'invention ;
- la figure 3 est une vue schématique, en perspective, montrant la structure générale d'un chariot autonome qui fait également partie de l'invention et qui est utilisable à l'intérieur d'un tel magasin de stockage automatique ;
- les figures 4, 5 et 6 sont respectivement des vues de détail, de côté en élévation, de dessus et en bout d'un tel chariot autonome illustré à la figure 3.

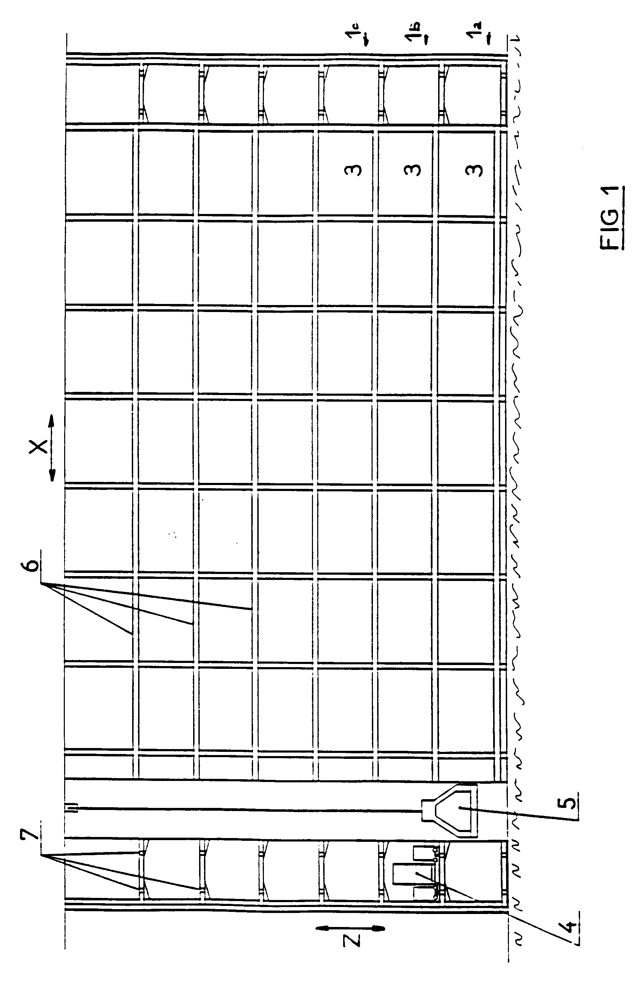

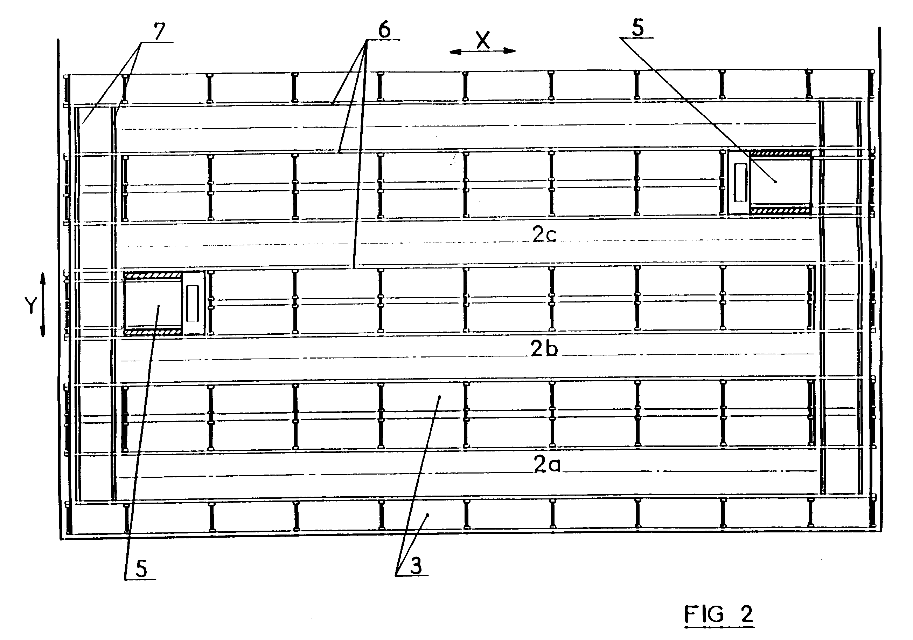

Si l'on se reporte aux schémas annexés, la structure générale du magasin de stockage conforme à l'invention et qui ressort plus particulièrement des figures 1 et 2, est la suivante.

Un tel magasin se présente donc sous la forme d'un ensemble de forme générale parallélépipédique, dont les dimensions sont déterminées en fonction du volume de stockage souhaité. Un tel magasin comporte une pluralité de niveaux superposés (1a,1b,1c..), chaque niveau étant subdivisé en couloirs parallèles (2a,2b,2c..) de part et d'autre desquels sont disposées des rangées de casiers ou alvéoles désignés par la référence unique (3), et dont les dimensions sont fonction des produits à stocker. Une telle structure est réalisée par assemblage de montants, poutrelles et traverses et ce de manière connue.

La mise en place et le prélèvement du produit à l'intérieur des zones de stockage (3), est réalisée par l'intermédiaire de chariots autonomes, désignés par la référence générale (4), lesdits chariots (4) étant amenés à un niveau prédéterminé par l'intermédiaire d'au moins un ensemble élévateur (ascenseur) (5).

Conformément à l'invention, un tel magasin se caractérise en ce que chaque niveau (1a,1b,1c..) comporte un ensemble de rails (6) orientés selon l'axe X dudit magasin disposées à chaque niveau à l'intérieur de chacun des couloirs ou allées (2a,2b,2c..) et un ensemble de rails également à chaque niveau (7) orientés selon l'axe transversal Y perpendiculaire aux allées (2a,2b,2c..). Dans la forme de réalisation illustrée aux figures 1 et 2, le magasin conforme à l'invention comporte deux ensembles de rails (7) orientés selon l'axe Y, un à chaque extrémité du magasin. Par ailleurs, deux systèmes élévateurs (5) sont également prévus, intégrés à l'intérieur même dudit magasin, desservant chaque extrémité.

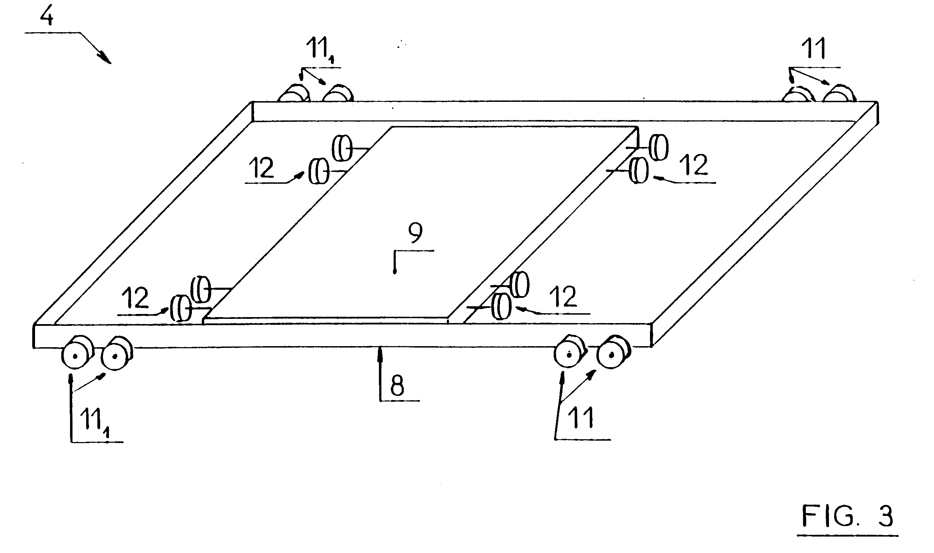

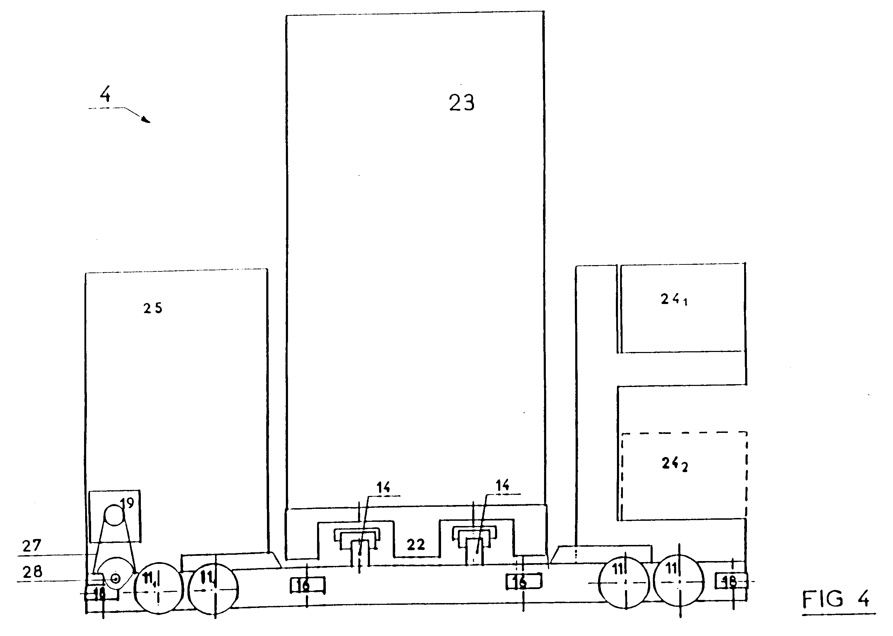

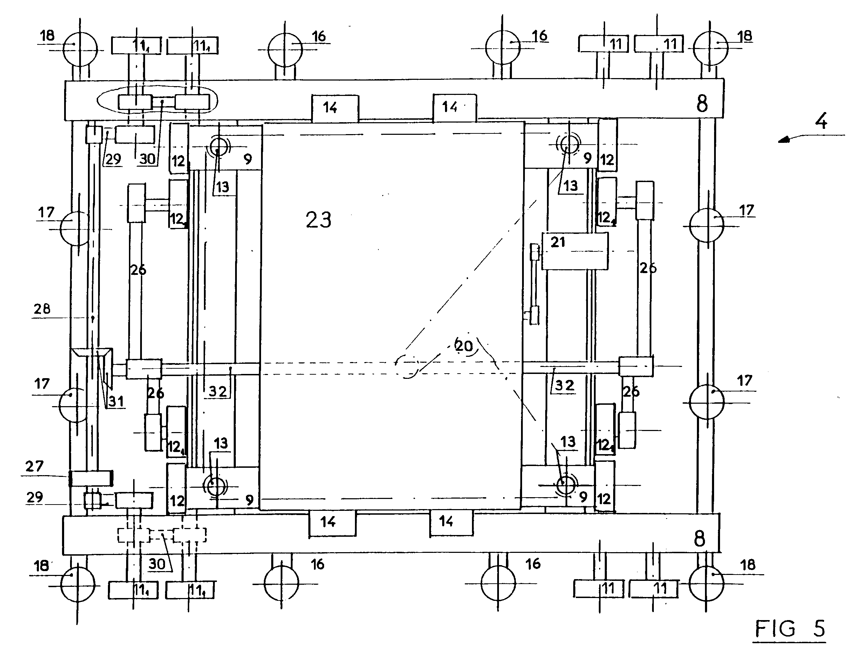

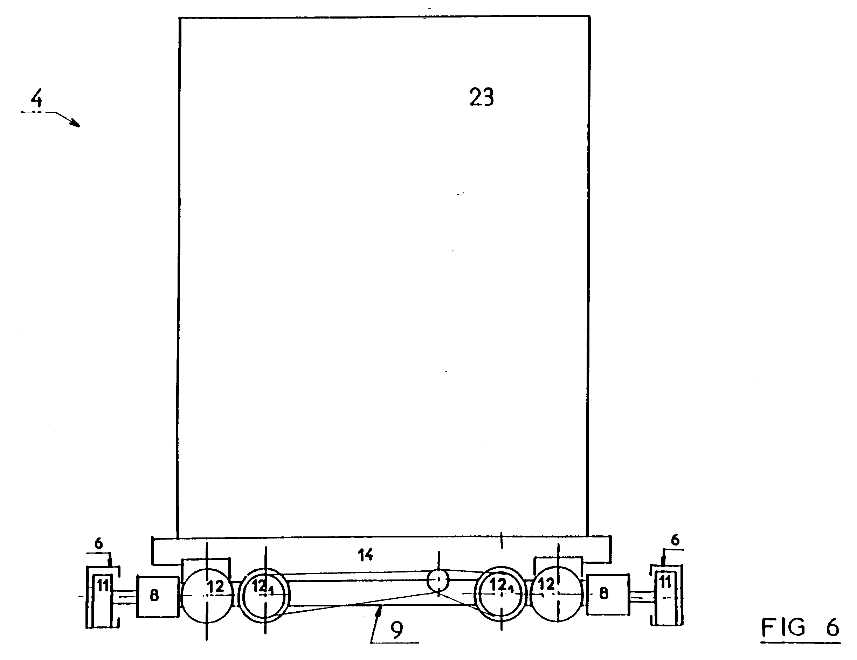

Selon une autre caractéristique essentielle d'un magasin conforme à l'invention, les chariots autonomes (4) utilisés dans un tel magasin sont conçus pour être déplacés indifféremment sur les jeux de rails orientés selon les axes X ou Y. Pour ce faire, dans le mode de réalisation qui fait également partie de l'invention et qui ressort des figures 3, 4, 5 et 6, lesdits chariots autonomes (4) comportent essentiellement deux châssis permutables (8) et (9), équipés chacun de jeux de roues permetttant d'associer l'un des châssis avec les rails (6) orientés selon l'axe X, l'autre avec les rails (7) orientés selon l'axe Y.

L'un des châssis (8), dit "châssis extérieur", supporte les organes suivants :
- les roues motrices (11₁) et porteuses (11) nécessaires aux déplacements selon l'axe X ;
- les galets nécessaires au guidage latéral dans les deux axes :
   . (16) selon X
   . (17) selon Y
   . (18) selon X et Y
- les vis à billes (13) qui assurent la liaison et le mouvement relatif des deux châssis ;
- le moteur (20) et la courroie de commande de ces vis ;
- le moteur (19) qui par la courroie (27) commande l'arbre (28), lequel par les courroies (29) et (30) commande les roues (11₁) (motorisation selon X), puis par le couple conique (31) commande l'arbre (32) et les quatre courroies (26) ;
- le moteur (21) qui commande la translation des fourches bidirectionnelles (14) ;
- les supports des blocs de batteries (24₁) et (24₂) ;
- l'armoire électrique (25).

Le châssis intérieur (9) supporte les organes suivants :
- les paliers des écrous à billes sur lesquels il est monté ;
- les roues motrices (12₁) et porteuses (12) nécessaires au déplacement selon Y ;
- les fourches bidirectionnelles (14) sur lesquelles repose la palette (22) et sa charge (23) ;
- issues du châssis (8), les courroies (26) qui commandent les roues motrices (12₁) (motorisation selon Y).

La géométrie du montage de ces courroies (26), dont la variation d'entraxe est négligeable au cours du déplacement relatif d'un châssis par rapport à l'autre permet, à partir d'une seule motorisation, de commander les deux axes de fonctionnement X et Y. La transmission restant toujours positive, cela permet également de n'utiliser qu'un seul codeur et qu'un seul programme pour le pilotage du positionnement selon ces axes.

Un tel ensemble de stockage fonctionne de la manière suivante.

Le chariot est dans un ascenseur, une palette ou un container est posé sur les fourches bidirectionnelles ; le châssis extérieur (8) est en position basse et l'ensemble repose sur les roues (11) et (11₁).

L'ascenseur se positionne, ses rails alignés et nivelés avec ceux du réseau fixe du niveau considéré. L'ordre d'effectuer sa mission est donnée au chariot. Il sort de l'ascenseur qui devient disponible pour aller transférer un autre chariot. Le chariot (4) qui vient de sortir de l'ascenseur (5) roule sur le réseau fixe jusqu'au croisement avec les rails (7). Il s'arrête avec précision sur ce croisement.

Le châssis intérieur (9) descend, les roues (12) et (12₁) prennent appui sur les rails (7) et le châssis extérieur monte. Les roues (11) ou (11₁) quittent les rails (6). Le chariot (4) se met en route selon Y et se déplace jusqu'au carrefour correspondant à l'allée où il doit déposer sa palette.

Il s'arrête avec précision au centre de ce carrefour. Le châssis extérieur descend, le chariot retrouve sa position de fonctionnement selon X.

Il pénètre dans l'allée et se positionne précisément devant l'alvéole où il doit déposer sa palette. Dans la position où il se trouve - cadre intérieur en position haute - les fourches et la palette passent au dessus du rail et de la lisse arrière de l'alvéole.

Les fourches se déploient, la palette est amenée au dessus de sa position de stockage.

Les cadres inversent leurs positions relatives.

Les roues du cadre intérieur ne trouvant pas d'appui, c'est la palette qui vient se poser sur le rail et la lisse arrière, puis, le mouvement continuant, les fourches se dégagent verticalement de la palette. Les fourches se rétractent en position centrale. Les cadres inversent leur position, le chariot peut répartir soit pour aller chercher une palette dans l'allée où il se trouve ou dans une autre au même niveau - les opérations seraient alors les mêmes que celles décrites mais dans l'ordre inverse - soit pour retourner dans un ascenseur.

Un tel ensemble de stockage présente, par rapport aux solutions antérieures, les avantages suivants :
- le changement de direction à angle droit s'effectue dans l'espace minimum ;
- la configuration décrite permet de n'avoir que deux motorisations pour quatre mouvements :
   . déplacement selon X
   . déplacement selon Y
   . élévation de la charge au dessus du plan de dépose dans les alvéoles de stockage
   . commutation des jeux de roues.

## Revendications

1. Magasin de stockage automatisé se présentant sous la forme d'un ensemble comprenant une pluralité de niveaux superposés (1a,1b,1c..), la mise en place et le prélèvement à l'intérieur des zones de stockage (3) étant réalisé par l'intermédiaire de chariots autonomes (4) ;
- chaque niveau de rangement (1a,1b,1c) comprenant un ensemble de rails formant des voies orientées selon un axe longitudinal X du magasin à l'intérieur de chaque travée (2a,2b,2c) et selon un axe transversal Y ;
- les chariots autonomes (4) comportent deux châssis permutables (8,9) équipés chacun de jeux de roues (11,12) pouvant être associés, l'un (11) avec les rails orientés selon l'axe X, l'autre (12) avec les rails orientés selon l'axe Y,
**caractérisé** en ce que :
- chaque niveau est subdivisé en couloirs parallèles (2a,2b,2c..) de part et d'autre desquels sont disposées des rangées de casiers ou alvéoles (3) dont les dimensions sont fonction des produits à stocker ;
- lesdites voies orientées selon l'axe X du magasin et selon l'axe Y sont constituées :
. d'une pluralité de voies (6) orientées selon l'axe longitudinal X du magasin à l'intérieur de chaque travée (2a,2b,2c...) ;
. soit d'une seule voie (7) orientée selon l'axe transversal Y perpendiculairement et en bout des travées (2a,2b,2c..), soit de deux voies orientées selon l'axe transversal Y perpendiculairement et aux deux bouts des travées (2a,2b,2c) ;
- les chariots autonomes (4) comportent des moyens (fourches bidirectionnelles) sur lesquels repose le produit à manipuler pour assurer sa mise en place et son extraction d'une case de rangement, et ;
- lesdits chariots (4) sont amenés à un niveau prédéterminé par l'intermédiaire d'au moins un ensemble élévateur.

2. Chariot autonome (4) permettant la mise en place et l'extraction de produits à l'intérieur de zones de stockage d'un magasin selon la revendication 1, comportant deux châssis élémentaires (8,9), mobiles l'un par rapport à l'autre selon l'axe vertical,
- l'un des châssis (8) comportant des roues motrices (11₁) et porteuses (11) permettant d'assurer les déplacements du chariot selon un axe X ;
- le second châssis (9) supportant des roues motrices (12₁) et porteuses (12) permettant d'assurer les déplacements du chariot selon un axe Y, caractérisé en ce que le second châssis (9) supporte des fourches bidirectionnelles sur lesquelles repose le produit à manipuler pour mise en place ou extraction d'une case de rangement, et en ce que le premier châssis (18) comporte des galets de guidage latéral selon les deux axes XY.

## Claims

1. Automated storage room in the form of a unit comprising a plurality of superimposed levels (1a,1b,1c..), the products being positioned in and removed from the storage zones (3) by means of autonomous trucks (4),
- each storage level (1a,1b,1c..) including a set of rails forming races pointing along a longitudinal axis X of the stores inside each inter-column space (2a,2b,2c..) and along a transverse axis Y ;
- the autonomous trucks (4) including two permutable chassis (8,9) each equipped with sets of wheels (11,12), one (11) of which can be associated with the rails pointing along the axis X, the other (12) with the rails pointing along the Y axis,
***characterized*** in that :
- each level being subdivised into parallel corridors (2a,2b,2c..) on either side of which are arranged rows of racks cells (3), whose dimensions are a function of the products to be stored ;
- the said races pointing along the longitudinal axis X of the stores and along the transverse axis Y consist of :
. a plurality of races (6) pointing along the longitudinal axis X of the stores inside each inter-column space (2a,2b,2c..) ;
. either a single race (7) pointing along the transverse axis Y perpendicular to and at the end of the inter-column spaces (2a,2b,2c..), or two sets of races pointing along the transverse axis Y perpendicular and at the two ends of the inter-column spaces (2a,2b,2c..) ;
- the autonomous trucks (4) include means (two-way forks) on which the product to be handled rests in order to position it in and extract it from a storage compartment, and ;
- the said trucks (4) are brought to a predetermined level by means of at least one lift unit.

2. Autonomous truck (4) making it possible for products to be positioned in and extracted from storage zones of stores according to claim 1, including two elementary chassis (8,9) which can move respect to one another along the vertical axis,
- one of the chassis (8) including driving wheels (11₁) and supporting wheels (11) making it possible to provide, the displacement of the truck along an axis X ;
- the second chassis (9) supporting driving wheels (12₁) and supporting wheels (12) making it possible to provide the displacements of the truck along an axis Y, characterized in that the second chassis (9) supports two-ways forks on which the product to be handled rests so as to be positioned in or extracted from a storage compartment, and in that the first chassis (8) comprises rollers for lateral guidance along the two axes X and Y.

## Patentansprüche

1. Automatisiertes Lagermagazin in Form einer Einheit, die eine Vielzahl von übereinanderliegenden Lageretagen (1a, 1b, 1c..) umfaßt, wobei das Einlagern und Entnehmen im Inneren von Lagerbereichen (3) mittels selbständiger Wagen (4) bewirkt wird,
- wobei jede Aufbewahrungsetage (1a, 1b, 1c) eine Schieneneinheit umfaßt, die entlang einer X-Längsachse des Magazins in jeder Reihe (2a, 2b, 2c) und entlang einer Y-Querachse ausgerichtete Stränge bildet;
- wobei die selbständigen Wagen (4) zwei austauschbare Fahrgestelle (8, 9) aufweisen, die jeweils mit Räderpaaren (11, 12) ausgerüstet sind, wobei eines (11) den entlang der X-Achse ausgerichteten Schienen, das andere (12) den entlang der Y-Achse ausgerichteten Schienen zugeordnet werden kann,
dadurch gekennzeichnet,
- daß jede Lageretage in parallele Flurreihen (2a, 2b, 2c) unterteilt ist, auf deren beiden Seiten Fächer- oder Zellenreihen (3) angeordnet sind, deren Abmessungen von den zu lagernden Produkten abhängig sind,
- daß die entlang der X-Achse und der Y-Achse des Magazins ausgerichteten Stränge
. eine Vielzahl von Strängen (6) umfassen, die in jeder Reihe (2a, 2b, 2c) des Magazins entlang der X-Längsachse ausgerichtet sind, und
. entweder einen einzigen Strang (7), der am Ende der Reihen (2a, 2b, 2c) senkrecht zu diesen und entlang der Y-Querachse ausgerichtet ist, oder zwei Stränge umfassen, die an beiden Enden der Reihen (2a, 2b, 2c) senkrecht zu diesen und entlang der Y-Querachse ausgerichtet sind,
- daß die selbständigen Wagen (4) Mittel (zweiseitig gerichtete Gabeln) aufweisen, auf denen das zum Einlagern in und Entnehmen aus einem Aufbewahrungsfach zu hantierende Produkt ruht, und
- daß die Wagen (4) mittels wenigstens einer Hebeeinheit in eine bestimmte Lageretage gebracht werden.

2. Selbständiger Wagen (4), der das Einlagern und die Entnahme von Produkten im Innern von Lagerbereichen eines Magazins nach Anspruch 1 ermöglicht, und der zwei Grundfahrgestelle (8, 9) aufweist, die relativ zueinander bezüglich der vertikalen Achse beweglich sind,
- wobei eines der Fahrgestelle (8) angetriebene Räder (11₁) und tragende Räder (11) aufweist, die die Bewegungen des Wagens entlang einer X-Achse ermöglichen,
- wobei das zweite Fahrgestell (9) angetriebene Räder (12₁) und tragende Räder (12) trägt, die die Bewegungen des Wagens entlang einer Y-Achse ermöglichen,
dadurch gekennzeichnet, daß
- das zweite Fahrgestell (9) zweiseitig gerichtete Gabeln trägt, auf denen das zum Einlagern in und Entnehmen aus einem Aufbewahrungsfach zu manipulierende Produkt ruht, und daß das erste Fahrgestell (18) Rollen für eine seitliche Führung entlang der zwei Achsen X, Y aufweist.
